# EUROPEAN PATENT APPLICATION

(11) **EP 4 672 373 A1**
(43) Date of publication of application: **31.12.2025**
(21) Application number: 23942186.0
(22) Date of filing: 15.12.2023
(51) Int. Cl.: H01M 4/505, H01M 4/525

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(30) Priority: 19.06.2023 CN 202310728659
(71) Applicant: Contemporary Amperex Technology Co., Limited, Ningde City, Fujian 352100 (CN)
(72) Inventor: WU, Kai, Ningde, Fujian 352100 (CN); LIANG, Zibin, Ningde, Fujian 352100 (CN); WANG, Yuhao, Ningde, Fujian 352100 (CN); LIN, Wenguang, Ningde, Fujian 352100 (CN); LI, Qiang, Ningde, Fujian 352100 (CN); ZHANG, Xinxin, Ningde, Fujian 352100 (CN)
(74) Representative: Kraus & Lederer PartGmbB
(86) International application number: PCT/CN2023/139053
(87) International publication number: WO 2024/259920

(57) **Abstract**

A positive electrode active material and a preparation method thereof, a positive electrode plate, a battery, and an electric device. The positive electrode active material includes: NaₓMnₐFe_{b}M_{c}N_{d}O_{2+δ-e}Fₑ, where 0.5 ≤ x ≤ 1.1, a ≥ 0, b ≥ 0, c ≥ 0, d > 0, a + b + c + d = 1, -0.1 ≤ δ ≤ 0.1, and e ≥ 0; M ions include at least one of Ni²⁺, Ni³⁺, Cu²⁺, Cu⁺, Zn²⁺, Mg²⁺, Y³⁺, La³⁺, In³⁺, Sb³⁺, Li⁺, Sn²⁺, and Ag⁺; ΣBᵢ × I₁⁴ ≥ 1500 Å⁻⁴, where Bᵢ is a molar fraction of cations, Iᵢ is an ionic potential of the cations, in unit of Å⁻¹, and the cations include manganese ions, iron ions, M ions, and N ions; and the ionic potential of the N ions is greater than or equal to 5 Å⁻¹.

## Description

### TECHNICAL FIELD

The present application pertains to the field of secondary battery technologies, and specifically, to a positive electrode active material and a preparation method thereof, a positive electrode plate, a battery, and an electric device.

### BACKGROUND

Secondary batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace.

Sodium-ion batteries are a type of secondary battery, and layered transition metal oxides are commonly used positive electrode active materials for sodium-ion batteries. However, existing sodium-ion batteries containing layered transition metal oxides exhibit poor initial coulombic efficiency and cycling performance.

### SUMMARY

In view of the technical problems existing in the background, the present application provides a positive electrode active material, with an objective to address the issues of low initial coulombic efficiency and cycling performance in batteries containing such materials.

To achieve the above objective, a first aspect of the present application provides a positive electrode active material, the positive electrode active material including:

NaₓMnₐFe_{b}M_{c}N_{d}O_{2+δ-e}Fₑ,

where 0.5 ≤ x ≤ 1.1, a ≥ 0, b ≥ 0, c ≥ 0, d > 0, a + b + c + d = 1, -0.1 ≤ δ ≤ 0.1, and e ≥ 0; M ions include at least one of Ni²⁺, Ni³⁺, Cu²⁺, Cu⁺, Zn²⁺, Mg²⁺, Y³⁺, La³⁺, In³⁺, Sb³⁺, Li⁺, Sn²⁺, and Ag⁺; ΣBᵢ × I₁⁴ ≥ 1500 Å⁻⁴, where Bᵢ is the molar fraction of cations, Iᵢ is the ionic potential of the cations, in unit of Å⁻¹, and the cations include manganese ions, iron ions, M ions, and N ions; and the ionic potential of the N ions is greater than or equal to 5 Å⁻¹.

The positive electrode active material of the present application maintains structural stability during deintercalation of sodium, thereby improving the initial coulombic efficiency and cycling performance of a battery.

In some embodiments of the present application, 1500 Å⁻⁴ ≤ ΣBᵢ × Iᵢ⁴ ≤ 1900 Å⁻⁴. This can improve the initial coulombic efficiency and cycling performance of the battery.

In some embodiments of the present application, the N ions include at least one of B³⁺, Ti⁴⁺, Al³⁺, Si⁴⁺, Sn⁴⁺, Sb⁵⁺, Zr⁴⁺, and Nb⁵⁺, optionally, the N ions include at least one of B³⁺, Ti⁴⁺, Zr⁴⁺, and Al³⁺. This can improve the initial coulombic efficiency and cycling performance of the battery.

In some embodiments of the present application, the M ions include at least one of Ni²⁺, Ni³⁺, Cu²⁺, Cu⁺, Zn²⁺, and Mg²⁺.

In some embodiments of the present application, the positive electrode active material satisfies one or more of the following conditions: x satisfies 0.7 ≤ x ≤ 1, optionally 0.8 ≤ x ≤ 1; a satisfies 0.3 ≤ a ≤ 0.7, optionally 0.35 ≤ a ≤ 0.55; b satisfies 0.1 ≤ b ≤ 0.4, optionally 0.2 ≤ b ≤ 0.3; c satisfies 0.2 ≤ c ≤ 0.5, optionally 0.3 ≤ c ≤ 0.4; d satisfies 0.005 ≤ d ≤ 0.1, optionally 0.01 ≤ d ≤ 0.05; δ satisfies -0.05 ≤ δ ≤ 0.05, optionally -0.02 ≤ δ ≤ 0.02; and e satisfies 0 ≤ e ≤ 0.01, optionally 0.001 ≤ e ≤ 0.005.

In some embodiments of the present application, 0.005 ≤ d/(a + b + c) ≤ 0.1, optionally 0.01 ≤ d/(a + b + c) ≤ 0.05. This can improve the initial coulombic efficiency and cycling performance of the battery.

In some embodiments of the present application, a phase of the positive electrode active material includes an O3 phase, a space group includes R3̅*m*, and an interlayer spacing ranges from 0.53 nm to 0.54 nm. This can increase the capacity of the battery.

In some embodiments of the present application, the positive electrode active material satisfies one or more of the following conditions:
Dᵥ50 of the positive electrode active material ranges from 2 µm to 30 µm, optionally from 4 µm to 12 µm;
a specific surface area of the positive electrode active material ranges from 0.1 m²/g to 2 m²/g, optionally from 0.3 m²/g to 1 m²/g; and
a compacted density of the positive electrode active material under 8 tons of pressure ranges from 3 g/cm³ to 5 g/cm³, optionally from 3.5 g/cm³ to 4.5 g/cm³.

Thus, when one or more of the Dᵥ50, specific surface area, and compacted density of the positive electrode active material fall within the above ranges, the conduction distance of Na ions within the positive electrode active material is short, surface side reactions are less, promoting the positive electrode active material to achieve the specific capacity thereof, and improving the capacity retention rate of the battery containing the same.

A second aspect of the present application provides a method for preparing the positive electrode active material described in the first aspect, including:
mixing an Na source, an Fe source, an Mn source, an M source, and an N source to obtain a precursor; and
calcining the precursor to obtain the positive electrode active material.

Thus, the present application can prepare the above positive electrode active material with excellent structural stability, thereby improving the initial coulombic efficiency and cycling stability of the battery.

A third aspect of the present application provides another method for preparing the positive electrode active material described in the first aspect, including:
mixing an Fe source, an Mn source, an M source, and an N source with water to obtain a mixed solution;
reacting the mixed solution with a precipitant to obtain a precursor; and
mixing and calcining the precursor with an Na source to obtain the positive electrode active material.

Thus, the present application can prepare the above positive electrode active material with excellent structural stability, thereby improving the initial coulombic efficiency and cycling stability of the battery.

A fourth aspect of the present application provides a positive electrode plate, including the positive electrode active material described in the first aspect, a positive electrode active material prepared by the method described in the second aspect, or a positive electrode active material prepared by the method described in the third aspect.

A fifth aspect of the present application provides a battery, including the positive electrode plate described in the fourth aspect. Thus, the battery has an excellent capacity retention rate.

A sixth aspect of the present application provides an electric device, including the battery described in the fifth aspect.

Additional aspects and advantages of the present application will be given in part in the following description, part of which will become apparent from the following description or be learned from the practice of the present application.

### DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the drawings:
FIG. 1 is a schematic structural diagram of a battery according to an embodiment of the present application;
FIG. 2 is a schematic structural diagram of a battery module according to an embodiment of the present application;
FIG. 3 is a schematic structural diagram of a battery pack according to an embodiment of the present application;
FIG. 4 is an exploded view of FIG. 3;
FIG. 5 is a schematic diagram of an electric device using a battery as a power source according to an embodiment of the present application;
FIG. 6 is a comparison diagram of the charge-discharge curves of button cells prepared in Example 1 and Comparative Example 1 at 10 mA/g for the first cycle; and
FIG. 7 is a comparison diagram of the capacity retention rates of button cells prepared in Example 1 and Comparative Example 1.

### Description of reference signs:

1: secondary battery; 2: battery module; 3: battery pack; 4: upper box body; and 5: lower box body.

### DESCRIPTION OF EMBODIMENTS

The following describes in detail embodiments of technical solutions of the present application. The following embodiments are merely intended for a clearer description of the technical solutions of the present application and therefore are merely used as examples which do not constitute any limitation on the protection scope of the present application.

In this specification, reference to "embodiment" means that specific features, structures, or characteristics described with reference to the embodiment may be included in at least one embodiment of the present application. The term "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

For brevity, this specification specifically discloses only some numerical ranges. However, any lower limit may be combined with any upper limit to form a range not explicitly recorded; any lower limit may be combined with another lower limit to form a range not explicitly recorded; and likewise, any upper limit may be combined with any other upper limit to form a range not explicitly recorded. In addition, each individually disclosed point or individual single numerical value may itself be a lower limit or an upper limit which can be combined with any other point or individual numerical value or combined with another lower limit or upper limit to form a range not expressly recorded.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

With the technological development and increasing demand for electric vehicles and rechargeable mobile devices, secondary batteries, as a representative of the field of new energy, have seen rapid advancements in related research. Compared to traditional lithium-ion batteries, sodium-ion batteries have a significant price advantage and a wide application prospect in large-scale energy storage systems.

Layered metal oxides, due to their high conductivity, high energy density, large capacity, and long cycle life, have become one of the popular positive electrode active materials for sodium-ion batteries. Before charging and discharging of a battery, layered metal oxides have a high sodium content, with positively charged sodium ions between oxygen atoms shielding the negative electrostatic repulsion between oxygen atoms. As the first charge proceeds, the deintercalation of sodium ions from a surface of the layered metal oxide and the increase in negative electrostatic repulsion between oxygen atoms, cause irreversible structural changes in the layered metal oxide, reducing the sodium intercalation sites, and leading to a decrease in the initial coulombic efficiency of the battery. Additionally, as the negative electrostatic repulsion between oxygen atoms in the layered metal oxide increases, the local structure thereof becomes unstable, making it prone to reconstruction into new phases such as a rock-salt phase or a spinel phase. Additionally, after the reduction of sodium ions, the activity of oxygen increases, making it prone to side reactions with an electrolyte, leading to the loss of cations and oxygen ions and the formation of cracks, thereby reducing the cycling performance of the battery.

In the present application, the positive electrode active material includes N ions with an ionic potential greater than or equal to 5 Å⁻¹, and the manganese ions, iron ions, M ions, and N ions satisfy ΣBᵢ × I₁⁴ ≥ 1500 Å⁻⁴. The resulting positive electrode active material exhibits strong covalent bonding between cations and oxygen, with strong interactions, effectively stabilizing structural changes of the positive electrode active material during deintercalation of sodium, thereby improving the initial coulombic efficiency of the battery. Additionally, due to the strong interaction between cations and oxygen in the resulting positive electrode active material, the repulsion between oxygen atoms is weakened, making the structure of the positive electrode active material stable and reducing the activity of oxygen, thereby suppressing side reactions between the layered oxide and the electrolyte, improving the cycling performance of the battery.

The positive electrode active material disclosed in the embodiments of the present application is suitable for secondary batteries, and the batteries disclosed in the embodiments of the present application can be used in electric devices using batteries as power sources or in various energy storage systems using batteries as energy storage elements. The electric device may include, but is not limited to, a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

A first aspect of the present application provides a positive electrode active material, the positive electrode active material including:

NaₓMnₐFe_{b}M_{c}N_{d}O_{2+δ-e}Fₑ,

where 0.5 ≤ x ≤ 1.1, a ≥ 0, b ≥ 0, c ≥ 0, d > 0, a + b + c + d = 1, -0.1 ≤ δ ≤ 0.1, and e ≥ 0; M ions include at least one of Ni²⁺, Ni³⁺, Cu²⁺, Cu⁺, Zn²⁺, Mg²⁺, Y³⁺, La³⁺, In³⁺, Sb³⁺, Li⁺, Sn²⁺, and Ag⁺; ΣBᵢ × I₁⁴ ≥ 1500 Å⁻⁴, Bᵢ is the molar fraction of cations, Iᵢ is the ionic potential of the cations, in unit of Å⁻¹, the cations include manganese ions, iron ions, M ions, and N ions; and the ionic potential of the N ions is greater than or equal to 5 Å⁻¹.

The present application includes at least the following beneficial effects: the positive electrode active material includes N ions with an ionic potential greater than or equal to 5 Å⁻¹, and the manganese ions, iron ions, M ions, and N ions satisfy ΣBᵢ × Iᵢ⁴ ≥ 1500 Å⁻⁴. The resulting positive electrode active material exhibits strong covalent bonding between cations and oxygen, with strong interactions, effectively stabilizing structural changes of the positive electrode active material during deintercalation of sodium, thereby improving the initial coulombic efficiency of a battery. Additionally, due to the strong interaction between cations and oxygen in the resulting positive electrode active material, the repulsion between oxygen atoms is weakened, making the structure of the positive electrode active material stable and reducing the activity of oxygen, thereby suppressing side reactions between the layered oxide and the electrolyte, improving the cycling performance of the battery.

In the present application, the ionic potential Iᵢ of cations is defined as the cation charge number divided by the cation radius, where the cation charge number is equal to the valence thereof, and the cation radius is in Å (1 Å = 10⁻¹⁰ m); Bᵢ is the molar fraction of the cations and is equal to the moles of the cations in the positive electrode active material / (moles of manganese ions a + moles of iron ions b + moles of M ions c + moles of N ions d) × 100%, where moles of manganese ions a + moles of iron ions b + moles of M ions c + moles of N ions d = 1, and Σ represents summation, for example, ΣBᵢ × Iᵢ4 = B_{Mn} × I_{Mn}⁴ + B_{Fe} × I_{Fe}⁴ + B_{M} × I_{M}⁴ + Bₙ × Iₙ⁴ in the present application.

In some embodiments of the present application, in the positive electrode active material NaₓMnₐFe_{b}M_{c}N_{d}O_{2+δ-e}Fₑ, where ΣBᵢ × I₁⁴ ≥ 1500 Å⁻⁴, for example, 1500 Å⁻⁴ to 3000 Å⁻⁴, 1600 Å⁻⁴ to 2900 Å⁻⁴, 1700 Å⁻⁴ to 2800 Å⁻⁴, 1800 Å⁻⁴ to 2700 Å⁻⁴, 1900 Å⁻⁴ to 2600 Å⁻⁴, 2000 Å⁻⁴ to 2500 Å⁻⁴, 2100 Å⁻⁴ to 2400 Å⁻⁴, and 2200 Å⁻⁴ to 2300 Å⁻⁴. In other embodiments of the present application, in the positive electrode active material NaₓMnₐFe_{b}M_{c}N_{d}O_{2+δ-e}Fₑ, where 1500 Å⁻⁴ ≤ ΣBᵢ × Iᵢ⁴ ≤ 1900 Å⁻⁴. Thus, in the present application, the positive electrode active material incorporates N ions with an ionic potential greater than or equal to 5 Å⁻¹, and the cations (including manganese ions, iron ions, M ions, and N ions) satisfy the above condition for ΣBᵢ × Iᵢ⁴, resulting in a positive electrode active material with strong covalent bonding between cations and oxygen, with strong interactions, effectively stabilizing structural changes of the positive electrode active material during deintercalation of sodium, thereby improving the initial coulombic efficiency of the battery. Additionally, due to the strong interaction between cations and oxygen in the resulting positive electrode active material, the repulsion between oxygen atoms is weakened, making the structure of the positive electrode active material stable and reducing the activity of oxygen, thereby suppressing side reactions between the layered oxide and the electrolyte, improving the cycling performance of the battery.

In some embodiments of the present application, in the positive electrode active material NaₓMnₐFe_{b}M_{c}N_{d}O_{2+δ-e}Fₑ, x may satisfy 0.5 ≤ x ≤ 1.1, for example, 0.6 ≤ x ≤ 1.1, 0.7 ≤ x ≤ 1, 0.8 ≤ x ≤ 1.1, 1 ≤ x ≤ 1.1, or the like. Thus, the positive electrode active material includes an element sodium with the content, enabling the battery to have a high capacity. In other embodiments of the present application, in the positive electrode active material NaₓMnₐFe_{b}M_{c}N_{d}O_{2+δ-e}Fₑ, x may satisfy 0.7 ≤ x ≤ 1, for example, 0.8 ≤ x ≤ 1.

It should be noted that in the positive electrode plate, the battery, or the electric device, due to processes such as formation and cycling, sodium ions may be consumed, resulting in a measured content x of the element sodium in the positive electrode active material being less than 1. Additionally, if a sodium supplement is used in a positive electrode plate and a negative electrode plate, the measured content x of the element sodium in the positive electrode active material may be greater than 1 after formation and cycling processes.

In some embodiments of the present application, in the positive electrode active material NaₓMnₐFe_{b}M_{c}N_{d}O_{2+δ-e}Fₑ, a may satisfy a ≥ 0, for example, 0.001 ≤ a < 1, 0.005 ≤ a ≤ 0.9, 0.1 ≤ a ≤ 0.8, 0.2 ≤ a ≤ 0.7, 0.3 ≤ a ≤ 0.6, 0.4 ≤ a ≤ 0.5, or the like. Thus, the positive electrode active material includes manganese with the content, effectively improving the structural stability of the positive electrode active material and enhancing the cycling stability of the battery containing the same. In other embodiments of the present application, in the positive electrode active material NaₓMnₐFe_{b}M_{c}N_{d}O_{2+δ-e}Fₑ, a may satisfy 0.3 ≤ a ≤ 0.7, for example, 0.35 ≤ a ≤ 0.55.

In some embodiments of the present application, in the positive electrode active material NaₓMnₐFe_{b}M_{c}N_{d}O_{2+δ-e}Fₑ, b may satisfy b ≥ 0, for example, 0.001 ≤ b < 1, 0.005 ≤ b ≤ 0.9, 0.1 ≤ b ≤ 0.8, 0.2 ≤ b ≤ 0.7, 0.3 ≤ b ≤ 0.6, 0.4 ≤ b ≤ 0.5, or the like. Thus, the positive electrode active material includes Fe with the content, improving the specific capacity of the material. In other embodiments of the present application, in the positive electrode active material NaₓMnₐFe_{b}M_{c}N_{d}O_{2+δ-e}Fₑ, b may satisfy 0.1 ≤ b ≤ 0.4, for example, 0.2 ≤ b ≤ 0.3.

In some embodiments of the present application, in the positive electrode active material NaₓMnₐFe_{b}M_{c}N_{d}O_{2+δ-e}Fₑ, M ions may include at least one of Ni²⁺, Ni³⁺, Cu²⁺, Cu⁺, Zn²⁺, Mg²⁺, Y³⁺, La³⁺, In³⁺, Sb³⁺, Li⁺, Sn²⁺, and Ag⁺. In other embodiments of the present application, in the positive electrode active material NaₓMnₐFe_{b}M_{c}N_{d}O_{2+δ-e}Fₑ, M ions may include at least one of Ni²⁺, Ni³⁺, Cu²⁺, Cu⁺, Zn²⁺, and Mg²⁺.

In some embodiments of the present application, in the positive electrode active material NaₓMnₐFe_{b}M_{c}N_{d}O_{2+δ-e}Fₑ, c may satisfy 0 ≤ c, for example, 0.001 ≤ c < 1, 0.005 ≤ c ≤ 0.9, 0.1 ≤ c ≤ 0.8, 0.2 ≤ c ≤ 0.7, 0.3 ≤ c ≤ 0.6, 0.4 ≤ c ≤ 0.5, or the like. Thus, the positive electrode active material includes M ions with the content, improving the structural stability of the material. In other embodiments of the present application, in the positive electrode active material NaₓMnₐFe_{b}M_{c}N_{d}O_{2+δ-e}Fₑ, c may satisfy 0.2 ≤ c ≤ 0.5, for example, 0.3 ≤ c ≤ 0.4.

In some embodiments of the present application, in the positive electrode active material NaₓMnₐFe_{b}M_{c}N_{d}O_{2+δ-e}Fₑ, the ionic potential of N ions is greater than or equal to 5 Å⁻¹. Thus, in the present application, the positive electrode active material incorporates N ions with an ionic potential greater than or equal to 5 Å⁻¹, and the cations (including manganese ions, iron ions, M ions, and N ions) satisfy the above condition for ΣBᵢ × Iᵢ⁴, resulting in a positive electrode active material with strong covalent bonding between cations and oxygen, with strong interactions, effectively stabilizing structural changes of the positive electrode active material during deintercalation of sodium, thereby improving the initial coulombic efficiency of the battery. Additionally, due to the strong interaction between cations and oxygen in the resulting positive electrode active material, the repulsion between oxygen atoms is weakened, making the structure of the positive electrode active material stable and reducing the activity of oxygen, thereby suppressing side reactions between the layered oxide and the electrolyte, improving the cycling performance of the battery.

In an example, the N ions include at least one of B³⁺, Ti⁴⁺, Al³⁺, Si⁴⁺, Sn⁴⁺, Sb⁵⁺, Zr⁴⁺, and Nb⁵⁺. In other embodiments of the present application, the N ions include at least one of B³⁺, Ti⁴⁺, Zr⁴⁺, and Al³⁺.

The ionic potentials of common ions are shown in Table 1:

**Table 1: Ionic potentials of common ions**

| Ion | Ni²⁺ | Fe³⁺ | Mn⁴⁺ | Cu²⁺ | Li⁺ | Mg²⁺ | Zn²⁺ | B³⁺ | Si⁴⁺ | Ti⁴⁺ | Al³⁺ | Sn⁴⁺ | Sb⁵⁺ | Nb⁵⁺ | Zr⁴⁺ |
|---|---|---|---|---|---|---|---|---|---|---|---|---|---|---|---|
| Ionic Radius (Å) | 0.69 | 0.645 | 0.53 | 0.73 | 0.76 | 0.72 | 0.74 | 0.27 | 0.4 | 0.605 | 0.535 | 0.69 | 0.60 | 0.64 | 0.72 |
| Ionic Potential (Å⁻¹) | 2.90 | 4.65 | 7.55 | 2.74 | 1.32 | 2.78 | 2.70 | 11.11 | 10.0 | 6.61 | 5.61 | 5.8 | 8.33 | 7.81 | 5.56 |

In some embodiments of the present application, in the positive electrode active material NaₓMnₐFe_{b}M_{c}N_{d}O_{2+δ-e}Fₑ, d may satisfy d > 0, for example, 0.001 ≤ c ≤ 1, 0.005 ≤ c ≤ 0.9, 0.1 ≤ c ≤ 0.8, 0.2 ≤ c ≤ 0.7, 0.3 ≤ c ≤ 0.6, and 0.4 ≤ c ≤ 0.5. In other embodiments of the present application, in the positive electrode active material NaₓMnₐFe_{b}M_{c}N_{d}O_{2+δ-e}Fₑ, d may satisfy 0.005 ≤ d ≤ 0.1, for example, 0.01 ≤ d ≤ 0.05. Thus, by incorporating an N ion with the content in the positive electrode active material, and with the cations (including manganese ions, iron ions, M ions, and N ions) satisfying the above condition for ΣBᵢ × Iᵢ⁴, the resulting positive electrode active material exhibits strong covalent bonding between cations and oxygen, with strong interactions, effectively stabilizing structural changes of the positive electrode active material during deintercalation of sodium, thereby improving the initial coulombic efficiency of the battery. Additionally, due to the strong interaction between cations and oxygen in the resulting positive electrode active material, the repulsion between oxygen atoms is weakened, making the structure of the positive electrode active material stable and reducing the activity of oxygen, thereby suppressing side reactions between the layered oxide and the electrolyte, improving the cycling performance of the battery.

In some embodiments of the present application, in the positive electrode active material NaₓMnₐFe_{b}M_{c}N_{d}O_{2+δ-e}Fₑ, where 0.005 ≤ d/(a + b + c) ≤ 0.1, for example, 0.007 ≤ d/(a + b + c) ≤ 0.1, 0.01 ≤ d/(a + b + c) ≤ 0.095, 0.015 ≤ d/(a + b + c) ≤ 0.09, 0.02 ≤ d/(a + b + c) ≤ 0.085, 0.025 ≤ d/(a + b + c) ≤ 0.08, 0.03 ≤ d/(a + b + c) ≤ 0.075, 0.035 ≤ d/(a + b + c) ≤ 0.07, 0.04 ≤ d/(a + b + c) ≤ 0.065, 0.045 ≤ d/(a + b + c) ≤ 0.06, 0.05 ≤ d/(a + b + c) ≤ 0.055, or the like. In some embodiments of the present application, in the positive electrode active material NaₓMnₐFe_{b}M_{c}N_{d}O_{2+δ-e}Fₑ, 0.01 ≤ d/(a + b + c) ≤ 0.05. Thus, in the positive electrode active material of the present application, the molar amount of N relative to the sum of the molar amounts of Mn ions, Fe ions, and M ions satisfies the above relationship, improving the structural stability of the positive electrode active material, thereby improving the initial coulombic efficiency and cycling stability of the battery.

In some embodiments of the present application, in the positive electrode active material NaₓMnₐFe_{b}M_{c}N_{d}O_{2+δ-e}Fₑ, δ may satisfy -0.1 ≤ δ ≤ 0.1, and e may satisfy e ≥ 0, for example, -0.09 ≤ δ ≤ 0.09, -0.08 ≤ δ ≤ 0.08, -0.07 ≤ δ ≤ 0.07, -0.06 ≤ δ ≤ 0.06, -0.05 ≤ δ ≤ 0.05, -0.04 ≤ δ ≤ 0.04, -0.03 ≤ δ ≤ 0.03, -0.02 ≤ δ ≤ 0.02, -0.01 ≤ δ ≤ 0.01, -0.01 ≤ δ ≤ 0, 0 ≤ δ ≤ 0.01, or the like; and 0.01 ≤ e ≤ 0.09, 0.02 ≤ e ≤ 0.08, 0.03 ≤ e ≤ 0.07, 0.04 ≤ e ≤ 0.06, 0.05 ≤ e ≤ 0.06, or the like. In other embodiments of the present application, in the positive electrode active material NaₓMnₐFe_{b}M_{c}N_{d}O_{2+δ-e}Fₑ, δ may satisfy -0.05 ≤ δ ≤ 0.05, for example, -0.02 ≤ δ ≤ 0.02; and e may satisfy 0 ≤ e ≤ 0.01, for example, 0.001 ≤ e ≤ 0.005.

Specifically, doping the oxygen site with this amount of F in the positive electrode active material of the present application can effectively stabilize the oxygen in the positive electrode active material, thereby reducing structural damage due to lattice oxygen release, improving material stability, and thus enhancing the cycling stability of the battery.

It should be noted that in the positive electrode plate, the battery, or the electric device, due to cycling and other processes, there may be a loss of oxygen in the positive electrode active material, resulting in a measured oxygen content 2 + δ - e being less than 2 in the positive electrode active material.

In some embodiments of the present application, a phase of the positive electrode active material includes an O3 phase, a space group includes R3̅*m*, and an interlayer spacing ranges from 0.53 nm to 0.54 nm. For example, the interlayer spacing may be 0.532 nm to 0.54 nm, 0.535 nm to 0.54 nm, 0.537 nm to 0.54 nm, or the like. Specifically, the positive electrode active material forming the O3 phase has a high Na content, allowing for the extraction of more Na ions, resulting in a high capacity of the battery.

It should be noted that the phase, the space group, and the interlayer spacing of the positive electrode active material in the present application can be characterized using X-ray diffraction.

Specifically, the test method for the interlayer spacing d₀₀₃ of the 003 crystal plane and the space group of the positive electrode active material includes: in a dry room or glove box, grinding a sample to be tested in an agate mortar and passing the same through a 350-mesh sieve, taking an appropriate amount of the sieved sample, placing the sample in the center of the groove of a sample holder, ensuring the loose sample powder is slightly higher than the plane of the sample holder; lightly pressing the surface of the sample with a glass slide to level the surface of the sample flush with the plane of a frame, and scraping off excess powder. After sample preparation, testing is performed using a Brucker D8A_A25 X-ray powder diffractometer from Brucker AXS GmbH, with CuK_{α} radiation as a source, a wavelength of λ = 1.5406 Å, a 2θ scanning angle range of 5° to 60°, and a scanning rate of 4°/min. After testing, through the angle corresponding to the 003 crystal plane, the interlayer spacing d₀₀₃ of the 003 crystal plane can be obtained based on the Bragg equation 2d•sinθ = λ and each unit cell of the 003 crystal plane including three transition metal layers. The space group of the sample can be confirmed by comparing the XRD diffraction peaks of the sample with standard cards in XRD analysis software, and a characteristic peak in an XRD pattern within the range of 40.5° to 42.5° indicates that the positive electrode active material is in the O3 phase.

In some embodiments of the present application, Dᵥ50 of the positive electrode active material ranges from 2 µm to 30 µm. For example, Dᵥ50 of the positive electrode active material may be 2 µm to 29 µm, 4 µm to 28 µm, 5 µm to 15 µm, 6 µm to 14 µm, 8 µm to 13 µm, 9 µm to 12 µm, 10 µm to 11 µm, or the like. In other embodiments of the present application, Dᵥ50 of the positive electrode active material ranges from 4 µm to 12 µm.

In the present application, Dᵥ50 refers to a particle size when a cumulative volume distribution percentage reaches 50%. For example, it can be measured using a laser particle size analyzer (for example, Malvern Master Size 3000) in accordance with GB/T 19077-2016.

In some embodiments of the present application, the specific surface area of the positive electrode active material ranges from 0.1 m²/g to 2 m²/g. For example, the specific surface area of the positive electrode active material may be 0.1 m²/g to 1.5 m²/g, 0.2 m²/g to 1 m²/g, 0.3 m²/g to 0.8 m²/g, 0.3 m²/g to 0.5 m²/g, or the like. In other embodiments of the present application, the specific surface area of the positive electrode active material ranges from 0.3 m²/g to 1 m²/g.

In the present application, the specific surface area of the positive electrode active material can be tested using the following method: Approximately 7 g of the sample is placed in a 9 cc long tube with a bulb using a Micromeritics Gemini VII 2390 multi-station automatic specific surface area and pore analyzer, degassed at 200°C for 2 h, and then tested in the main unit to obtain the BET (specific surface area) data of the positive electrode active material.

In some embodiments of the present application, the compacted density of the positive electrode active material under 300 MPa pressure ranges from 3.0 g/cm³ to 5.0 g/cm³. For example, the compacted density of the positive electrode active material under 300 MPa pressure may be 3.0 g/cm³ to 4.9 g/cm³, 3.2 g/cm³ to 4.8 g/cm³, 3.5 g/cm³ to 4.5 g/cm³, 3.7 g/cm³ to 4.2 g/cm³, 4 g/cm³ to 4.2 g/cm³, or the like. In some embodiments of the present application, the compacted density of the positive electrode active material under 300 MPa pressure ranges from 3 g/cm³ to 4 g/cm³.

In the present application, "compacted density" has a meaning well-known in the art and can be measured using an instrument and a method known in the art. For example, the following test method may be used: A quantitative amount m of powder is placed in a special mold for compaction, the mold is placed on a compacted density instrument, a pressure of 300 MPa is set, the volume v of the powder under 300 MPa pressure is measured on the instrument, and the compacted density is calculated using the formula density = mass m / volume v (with reference to GB/T 24533-2009).

Specifically, when one or more of the Dᵥ50, specific surface area, and compacted density under 300 MPa pressure of the positive electrode active material of the present application fall within the above ranges, the conduction distance within the positive electrode active material is short, surface side reactions are less, promoting the positive electrode active material to achieve the specific capacity thereof, and improving the capacity retention rate of the battery containing the same.

A second aspect of the present application provides a method for preparing the positive electrode active material described in the first aspect, including:

S100: An Na source, an Fe source, an Mn source, an M source, and an N source are mixed to obtain a precursor.

In some embodiments of the present application, the Na source, the Fe source, the Mn source, the M source, and the N source are mixed to obtain a precursor according to the composition of the positive electrode active material described above.

It should be noted that due to potential Na source loss during subsequent calcination, the amount of Na added may be slightly higher than the required content of Na in the composition of the positive electrode active material described above.

The Na source, the Fe source, the Mn source, the M source, and the N source in the present application are conventional materials in the art, and those skilled in the art can select them based on actual considerations. For example, the Na source may include at least one of Na₂CO₃, NaHCO₃, NaOH, and Na₂O₂. The Fe source may include at least one of FeO, Fe₂O₃, and Fe₃O₄. The Mn source may include at least one of Mn₂O₃, Mn₃O₄, MnO, and MnO₂. The M source may include at least one of M oxides, M-containing salts, and other compounds. The N source may include at least one of N oxides, N-containing salts, and other compounds.

It should be noted that if an element F needs to be doped into the positive electrode active material, at least one of the Na source, the Fe source, the Mn source, the M source, and the N source uses at least one of the corresponding fluoride salt thereof or other compounds, for example, sodium fluoride, iron fluoride, manganese fluoride, M fluoride (M fluoride salt), and N fluoride (N fluoride salt).

S200: The precursor is calcined.

In some embodiments of the present application, the obtained precursor is placed in a muffle furnace and calcined in an air atmosphere, then cooled to room temperature, and mechanically crushed to obtain the positive electrode active material, where the calcination temperature may be 600°C to 1200°C. For example, the temperature may be 600°C to 1100°C, 700°C to 1000°C, 800°C to 900°C, or the like. The holding time ranges from 10 h to 20 h. For example, the time may be 10 h to 19 h, 11 h to 18 h, 12 h to 17 h, 13 h to 16 h, 14 h to 15 h, or the like.

Additionally, if needed, before calcining the precursor, the precursor may be pre-calcined and held at a temperature, where a pre-calcination temperature may be 600°C to 900°C. For example, the temperature may be 600°C to 850°C, 650°C to 800°C, 600°C to 750°C, 550°C to 700°C, 500°C to 650°C, 550°C to 600°C, or the like. A holding time may be 10 h to 20 h. For example, the time may be 10 h to 19 h, 11 h to 18 h, 12 h to 17 h, 13 h to 16 h, 14 h to 15 h, or the like.

Thus, the solid-phase method can be used to prepare the above positive electrode active material with stable structure, improving the initial coulombic efficiency and cycling stability of the battery.

A third aspect of the present application provides another method for preparing the positive electrode active material described in the first aspect, including:

Sa: An Fe source, an Mn source, an M source, and an N source with water are mixed to obtain a mixed solution.

In some embodiments of the present application, the Fe source, the Mn source, the M source, and the N source are mixed with water to obtain a mixed solution according to the composition of the positive electrode active material described above and water.

It should be noted that the Fe source, the Mn source, the M source, and the N source in the present application are conventional materials in the art, and those skilled in the art can select them based on actual needs. For example, the Fe source may include at least one of iron chloride, iron sulfate, and iron nitrate. The Mn source may include at least one of manganese chloride, manganese sulfate, and manganese nitrate. The M source may include at least one of M chlorides, sulfates, and nitrates. The N source may include at least one of N chlorides, sulfates, and nitrates.

Sb: The mixed solution is reacted with a precipitant to obtain a precursor

In some embodiments of the present application, the mixed solution obtained in step Sa is reacted with a solution containing a precipitant to obtain a precursor, where the solution containing the precipitant includes at least one of hydroxide, carbonate, and oxalate. For example, the solution containing the precipitant includes at least one of ammonia, carbonate, and oxalic acid.

Sc: The precursor is mixed and calcined with an Na source

In some embodiments of the present application, the obtained precursor is mixed with an Na source according to the composition of the positive electrode active material described above, uniformly mixed by ball milling or mechanical stirring, placed in a muffle furnace for calcination, then cooled to room temperature, and mechanically crushed to obtain the positive electrode active material, where the calcination temperature ranges from 600°C to 1200°C. For example, the temperature may be 700°C to 1100°C, 800°C to 1000°C, 900°C to 950°C, or the like. The calcination atmosphere may be air or oxygen. The holding time ranges from 10 h to 20 h. For example, the time may be 10 h to 19 h, 11 h to 18 h, 12 h to 17 h, 13 h to 16 h, 14 h to 15 h, or the like. The Na source may include at least one of Na₂CO₃, NaHCO₃, NaOH, and Na₂O₂.

It should be noted that, if needed, before mixing and calcining the precursor with the Na source, the precursor and the Na source mixture may be pre-calcined and held at a temperature. A pre-calcination temperature may be 600°C to 900°C. For example, the temperature may be 600°C to 850°C, 650°C to 800°C, 600°C to 750°C, 550°C to 700°C, 500°C to 650°C, 550°C to 600°C, or the like. A holding time may be 10 h to 20 h. For example, the time may be 10 h to 19 h, 11 h to 18 h, 12 h to 17 h, 13 h to 16 h, 14 h to 15 h, or the like.

In the present application, if the corresponding N source is water-insoluble, for example, N oxide (oxide of N), the N source is not added in step Sa, but in step Sc, the precursor is mixed and sintered with the Na source and the N source.

It should be noted that if an element F needs to be doped into the positive electrode active material, at least one of the Na source, the Fe source, the Mn source, the M source, and the N source uses at least one of the corresponding fluoride salt thereof or other compounds. For example, sodium fluoride, iron fluoride, manganese fluoride, M fluoride (M fluoride salt), and N fluoride (N fluoride salt).

It should be noted that due to potential Na source loss during calcination, the amount of Na added may be slightly higher than the required content of Na in the composition of the positive electrode active material described above.

Thus, the co-precipitation method can be used to prepare the above positive electrode active material with stable structure, improving the initial coulombic efficiency and cycling stability of the battery.

A fourth aspect of the present application provides a positive electrode plate including the positive electrode active material described in the first aspect or the positive electrode active material prepared by the method described in the second aspect.

The positive electrode plate typically includes a positive electrode current collector and a positive electrode active material layer disposed on the positive electrode current collector, where the positive electrode active material layer includes the positive electrode active material.

The positive electrode current collector may be a common metal foil or a composite current collector (the composite current collector may be formed by providing a metal material on a polymer matrix). In an example, the positive electrode current collector may include at least one of copper foil, aluminum foil, nickel foil, stainless steel foil, a stainless steel mesh, and carbon-coated aluminum foil.

The positive electrode active material layer may optionally include a conductive agent and a binder, where the conductive agent is used to improve the electrical conductivity of the positive electrode active material layer, and the binder is used to firmly adhere the positive electrode active material and the binder to the positive electrode current collector. Types of the conductive agent and binder are not specifically limited in the present application and can be selected depending on actual needs.

In an example, the conductive agent may include at least one of superconducting carbon, acetylene black, carbon black, Ketjen black, carbon dots, carbon nanotubes, graphene, and carbon nanofibers; and the binder may include at least one of styrene-butadiene rubber (SBR), water-based acrylic resin (water-based acrylic resin), carboxymethyl cellulose (CMC), polyvinylidene fluoride (PVDF), polytetrafluoroethylene (PTFE), ethylene-vinyl acetate copolymer (EVA), and polyvinyl alcohol (PVA).

These materials are all commercially available.

A fifth aspect of the present application provides a battery, including the positive electrode plate described in the fourth aspect. Thus, the battery has an excellent capacity retention rate.

The battery is a battery that can be charged after being discharged to activate active materials for continuous use.

It can be understood that the battery proposed in the present application is a sodium-ion battery.

Typically, a battery includes a positive electrode plate, a negative electrode plate, a separator, and an electrolyte. In a charge and discharge process of the battery, active ions intercalate and deintercalate back and forth between the positive electrode plate and the negative electrode plate. The separator is provided between the positive electrode plate and the negative electrode plate for separation. The electrolyte conducts ions between the positive electrode plate and the negative electrode plate.

### [Negative electrode plate]

In the battery, the negative electrode plate typically includes a negative electrode current collector and a negative electrode active material layer disposed on the negative electrode current collector, where the negative electrode active material layer includes a negative electrode active material.

The negative electrode current collector may be a common metal foil or a composite current collector (for example, the composite current collector may be formed by providing a metal material on a polymer matrix). In an example, the negative electrode current collector may be a copper foil.

A specific type of the negative electrode active material is not limited. An active material known in the art that can be used as a negative electrode of a sodium-ion battery can be used, and persons skilled in the art can make selection based on actual needs. In an example, the negative electrode active material may include, but is not limited to, at least one of sodium metal, carbon materials, alloy materials, transition metal oxides and/or sulfides, phosphorus-based materials, and titanate materials. Specifically, the carbon material may include at least one of hard carbon, soft carbon, amorphous carbon, and nanostructured carbon materials. The alloy material may include an alloy material formed from at least one of Si, Ge, Sn, Pb, and Sb. The transition metal oxides and sulfides have the general formula MₓN_{y}, where M includes at least one of Fe, Co, Ni, Cu, Mn, Sn, Mo, Sb, and V; and N includes O or S. The phosphorus-based material may include at least one of red phosphorus, white phosphorus, and black phosphorus. The titanate material may include at least one of Na₂Ti₃O₇, Na₂Ti₆O₁₃, Na₄Ti₅O₁₂, Li₄Ti₅O₁₂, and NaTi₂(PO₄)₃. These materials are all commercially available.

The negative electrode active material layer typically may also optionally include a binder and a conductive agent, where the conductive agent is used to improve the electrical conductivity of the negative electrode active material layer, and the binder is used to firmly adhere the negative electrode active material and the binder to the negative electrode current collector. The types of conductive agent and binder are not specifically limited in the present application and can be selected based on actual needs.

In an example, the conductive agent may include at least one of superconducting carbon, acetylene black, carbon black, Ketjen black, carbon dots, carbon nanotubes, graphene, and carbon nanofibers.

In an example, the binder may include at least one of styrene-butadiene rubber (SBR), styrene-butadiene copolymer (SBCs), water-based acrylic resin (water-based acrylic resin), and carboxymethyl cellulose (CMC).

The negative electrode active material layer may also optionally include a thickener, for example, carboxymethyl cellulose (CMC). However, the present application is not limited thereto, and may alternatively use other materials that can be used as thickeners for negative electrode plates of sodium-ion batteries.

### [Electrolyte]

The electrolyte may include an electrolytic salt and a solvent.

In an example, the electrolytic sodium salt may include at least one of sodium hexafluorophosphate, sodium difluoro(oxalato)borate, sodium tetrafluoroborate, sodium bis(oxalate)borate, sodium perchlorate, sodium hexafluoroarsenate, sodium bis(fluorosulfonyl)imide, sodium trifluoromethanesulfonate, and sodium bis(trifluoromethanesulfonyl)imide.

In an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the electrolyte may also include an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

### [Separator]

The separator is not particularly limited in the present application, and any common porous separators with electrochemical and mechanical stability can be selected based on actual needs, for example, it may include a single-layer or multi-layer film containing at least one of glass fiber, non-woven fabric, polyethylene, polypropylene, and polyvinylidene fluoride.

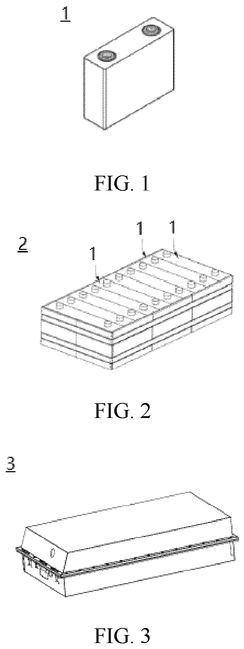

The battery is not particularly limited in shape in the embodiments of the present application, and may be cylindrical, rectangular, or of any other shape. FIG. 1 shows a secondary battery 1 of a rectangular structure as an example.

In some embodiments, the battery may include an outer package. The outer package is used for packaging the positive electrode plate, the negative electrode plate, and the electrolyte.

In some embodiments, the outer package may include a housing and a cover plate. The housing may include a base plate and a side plate connected onto the base plate, and the base plate and the side plate enclose an accommodating cavity. The housing has an opening communicating with the accommodating cavity, and the cover plate can cover the opening to close the accommodating cavity.

The positive electrode plate, the negative electrode plate, and the separator may be made into an electrode assembly through winding or lamination. The electrode assembly is packaged in the accommodating cavity. There may be one or more electrode assemblies in the battery, and the quantity may be adjusted as required.

In some embodiments, the outer package of the battery may include a hard shell, for example, a hard plastic shell, an aluminum shell, or a steel shell.

The outer package of the battery may also include a soft pack, for example, a pouch cell. A material of the soft package may be plastic, for example, may include at least one of polypropylene (PP), polybutylene terephthalate (PBT), and polybutylene succinate (PBS).

In some embodiments, batteries may be assembled into a battery module, and the battery module may include a plurality of batteries. The specific quantity may be adjusted based on application and capacity of the battery module.

FIG. 2 shows a battery module 2 as an example. Referring to FIG. 2, in the battery module 2, a plurality of secondary batteries 1 may be sequentially arranged in a length direction of the battery module 2. Certainly, the secondary batteries may alternatively be arranged in any other manners. Further, the plurality of secondary batteries 1 may be fixed by fasteners.

The battery module 2 may further include a housing with an accommodating space, and the plurality of secondary batteries 1 are accommodated in the accommodating space. In some embodiments, the battery module may be further assembled into a battery pack, and a quantity of battery modules included in the battery pack may be adjusted based on application and capacity of the battery pack.

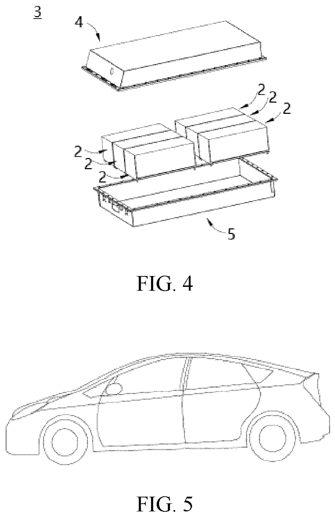

FIG. 3 and FIG. 4 show a battery pack 3 as an example. Referring to FIG. 3 and FIG. 4, the battery pack 3 may include a battery box and a plurality of battery modules 2 arranged in the battery box. The battery box includes an upper box body 4 and a lower box body 5. The upper box body 4 can cover the lower box body 5 to form an enclosed space for accommodating the battery modules 2. The plurality of battery modules 2 may be arranged in the battery box in any manner.

A sixth aspect of the present application provides an electric device, including the battery described in the fifth aspect. Specifically, the battery may be used as a power source of the electric device, and may also be used as an energy storage unit of the electric device. The electric device may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, and an energy storage system.

FIG. 5 shows an electric device as an example. The electric device includes a battery electric vehicle, a hybrid electric vehicle, or a plug-in hybrid electric vehicle.

In another example, the electric device may include a mobile phone, a tablet computer, or a notebook computer. Such electric device is generally required to be light and thin and may use a battery as its power source.

To describe the technical problems solved by the embodiments of the present application, technical solutions, and beneficial effects more clearly, the following further describes the present application in detail with reference to the embodiments and accompanying drawings. Apparently, the described embodiments are only some but not all of these embodiments of the present application. The following description of at least one exemplary example is merely illustrative and definitely is not construed as any limitation on the present application or on use of the present application. All other embodiments obtained by persons of ordinary skill in the art on the basis of the embodiments of the present application without creative efforts shall fall within the protection scope of the present application.

### Example 1

### [Preparation of NaNi_{0.24}Fe_{0.26}Mn_{0.39}Mg_{0.1}Si_{0.01}O₂]

Na₂CO₃, NiO, Fe₂O₃, Mn₂O₃, MgO, and SiO₂ were weighed in a molar ratio of Na:Ni:Fe:Mn:Mg:Si as 1:0.24:0.26:0.39:0.1:0.01, totaling 30 g of sample. The obtained sample was pre-ground in an agate mortar and then ball-milled in a planetary ball mill for 1 h to obtain a precursor mixture. The precursor mixture was then evenly placed in an open crucible, and subsequently heated in a muffle furnace at a rate of 5°C/min from room temperature to 950°C, held at 950°C for 15 h, and naturally cooled to obtain a positive electrode active material NaNi_{0.24}Fe_{0.26}Mn_{0.39}Mg_{0.1}Si_{0.01}O₂.

### [Preparation of positive electrode plate]

NaNi_{0.24}Fe_{0.26}Mn_{0.39}Mg_{0.1}Si_{0.01}O₂, a conductive agent carbon black (Super P), and a binder polyvinylidene fluoride (PVDF) were thoroughly mixed in a solvent NMP at a mass ratio of 80:15:5 to form a uniform positive electrode slurry. The positive electrode slurry was evenly applied on a surface of a positive electrode current collector aluminum foil, followed by drying and cold pressing, and punched into a disc with a diameter of 14 mm, to obtain a positive electrode plate.

### [Preparation of negative electrode plate]

The negative electrode plate used a metal sodium sheet.

### [Preparation of electrolyte]

Ethylene carbonate (EC) and diethyl carbonate (DEC) were mixed in equal volumes to obtain an organic solvent, then NaClO₄ was dissolved in the organic solvent to prepare an electrolyte with a concentration of 1 mol/L.

### [Separator]

A porous polyethylene film was used as the separator.

### [Preparation of button cell]

The positive electrode plate, the separator, and the negative electrode plate were sequentially stacked such that the separator was sandwiched between the positive electrode plate and the negative electrode plate for separation, and the prepared electrolyte was added to obtain a button cell.

The button cells containing positive electrode active materials in Examples 2 to 20 and Comparative Examples 1 to 4 were the same as in Example 1, except for differences in the parameters during the preparation of the positive electrode active material (see Table 1).

The compositions of the positive electrode active materials in the batteries of Examples 1 to 20 and Comparative Examples 1 to 4 of the present application are shown in Table 2.

**Table 2**

| Number | Positive electrode active material NaₓMnₐFe_{b}M_{c}N_{d}O_{2+δ-e}Fₑ | | | | | | | | | | | | |
|---|---|---|---|---|---|---|---|---|---|---|---|---|---|
| | Composition of positive electrode active material | Composition of M | Composition of N | ∑Bᵢ × Iᵢ⁴ (Å⁻⁴) | x | a | b | c | d | a + b + c + d | d/(a + b + c) | e | δ |
| Example 1 | NaNi_{0.24}Fe_{0.26}Mn_{0.39}Mg_{0.1}Si_{0**.**01}O₂ | Ni²⁺ and Mg²⁺ | Si⁴⁺ | *1510* | 1 | 0.39 | 0.26 | 0.34 | 0.01 | 1 | 0.010 | 0 | 0 |
| Example 2 | NaNi_{0.24}Fe_{0.24}Mn_{0.41}Cu_{0.1}B_{0.01}O₂ | Ni²⁺ and Cu²⁺ | B³⁺ | 1618 | 1 | 0.41 | 0.24 | 0.34 | 0.01 | 1 | 0.010 | 0 | 0 |
| Example 3 | NaNi_{0.33}Fe_{0.29}Mn_{0.33}B_{0.05}O₂ | Ni²⁺ | B³⁺ | 1992 | 1 | 0.33 | 0.29 | 0.33 | 0.05 | 1 | 0.053 | 0 | 0 |
| Example 4 | NaNi_{0.25}Fe_{0.2}Mn_{0.4}Mg_{0.1}Ti_{0.05}O₂ | Ni²⁺ and Mg²⁺ | Ti⁴⁺ | 1511 | 1 | 0.4 | 0.2 | 0.35 | 0.05 | 1 | 0.053 | 0 | 0 |
| Example 5 | NaNi_{0**.2**}Fe_{0.2**1**}Mn_{0.44}Zn_{0.01}Al_{0.05}O₂ | Ni²⁺ and Zn²⁺ | Al³⁺ | 1595 | 1 | 0.44 | 0.21 | 0.3 | 0.05 | 1 | 0.053 | 0 | 0 |
| Example 6 | NaNi_{0.2}Fe_{0.21}Mn_{0..44}Zn_{0.1}Sb_{0.05}O₂ | Ni²⁺ and Zn²⁺ | Sb⁵⁺ | 1786 | 1 | 0.44 | 0.21 | 0.3 | 0.05 | 1 | 0.053 | 0 | 0 |
| Example 7 | NaNi_{0.2}Fe_{0.21}Mn_{0.44}Zn_{0.0}Sn_{0.05}O₂ | Ni²⁺ and Zn²⁺ | Sn⁴⁺ | 1602 | 1 | 0.44 | 0.21 | 0.3 | 0.05 | 1 | 0.053 | 0 | 0 |
| Example 8 | NaNi_{0.2}Fe_{0.21}Mn_{0.44}Zn_{0.1}Nb_{0.05}O₂ | Ni²⁺ and Zn²⁺ | Nb⁵⁺ | 1732 | 1 | 0.44 | 0.21 | 0.3 | 0.05 | 1 | 0.053 | 0 | 0 |
| Example 9 | NaNi_{0.2}Fe_{0.21}Mn_{0.44}Zn_{0.1}B_{0.05}O₂ | Ni²⁺ and Zn²⁺ | B³⁺ | 2309 | 1 | 0.44 | 0.21 | 0.3 | 0.05 | 1 | 0.053 | 0 | 0 |
| Example 10 | NaNi_{0.2}Fe_{0.21}Mn_{0.44}Zn_{0.1}Ti_{0.05}O₂ | Ni²⁺ and Zn²⁺ | Ti⁴⁺ | 1643 | 1 | 0.44 | 0.21 | 0.3 | 0.05 | 1 | 0.053 | 0 | 0 |
| Example 11 | NaNi_{0.2}Fe_{0.21}Mn_{0.44}Zn_{0.1}Si_{0.05}O₂ | Ni²⁺ and Zn²⁺ | Si⁴⁺ | 2047 | 1 | 0.44 | 0.21 | 0.3 | 0.05 | 1 | 0.053 | 0 | 0 |
| Example 12 | NaNi_{0.2}Fe_{0.21}Mn_{0.44}Zn_{0.1}Zr_{0.05}O₂ | Ni²⁺ and Zn²⁺ | Zr⁴⁺ | 1595 | 1 | 0.44 | 0.21 | 0.3 | 0.05 | 1 | 0.053 | 0 | 0 |
| Example 13 | NaNi_{0.2}Fe_{0.255}Mn_{0.44}Zn_{0.1}B_{0.005}O₂ | Ni²⁺ and Zn²⁺ | B³⁺ | 1619 | 1 | 0.44 | 0.255 | 0.3 | 0.005 | 1 | 0.005 | 0 | 0 |
| Example 14 | NaNi_{0.2}Fe_{0.25}Mn_{0.44}Zn_{0.1}B_{0.01}O₂ | Ni²⁺ and Zn²⁺ | B³⁺ | 1718 | 1 | 0.44 | 0.25 | 0.3 | 0.01 | 1 | 0.010 | 0 | 0 |
| Example 15 | NaNi_{0.2}Fe_{0.16}Mn_{0.44}Zn_{0.1}B_{0.1}O₂ | Ni²⁺ and Zn²⁺ | B³⁺ | 3047 | 1 | 0.44 | 0.16 | 0.3 | 0.1 | 1 | 0.111 | 0 | 0 |
| Example 16 | NaNi_{0.2}Fe_{0.252}Mn_{0.44}Zn_{0.1}B_{0.008}O₂ | Ni²⁺ and Zn²⁺ | B³⁺ | 1689 | 1 | 0.44 | 0.252 | 0.3 | 0.008 | 1 | 0.008 | 0 | 0 |
| Example 17 | NaNi_{0.2}Fe_{0.24}Mn_{0.44}Zn_{0.1}B_{0.02}O₂ | Ni²⁺ and Zn²⁺ | B³⁺ | 1866 | 1 | 0.44 | 0.24 | 0.3 | 0.02 | 1 | 0.020 | 0 | 0 |
| Example 18 | NaNi_{0.2}Fe_{0.18}Mn_{0.44}Zn_{0.1}B_{0.08}O₂ | Ni²⁺ and Zn²⁺ | B³⁺ | 2752 | 1 | 0.44 | 0.18 | 0.3 | 0.08 | 1 | 0.087 | 0 | 0 |
| Example 19 | NaNi_{0.2}Fe_{0.169}Mn_{0.44}Zn_{0.1}B_{0.091}O₂ | Ni²⁺ and Zn²⁺ | B³⁺ | 2915 | 1 | 0.44 | 0.169 | 0.3 | 0.091 | 1 | 0.100 | 0 | 0 |
| Example 20 | NaNi_{0.2}Fe_{0.212}Mn_{0.44}Zn_{0.1}B_{0.048}O₂ | Ni²⁺ and Zn²⁺ | B³⁺ | 2280 | 1 | 0.44 | 0.212 | 0.3 | 0.048 | 1 | *0.050* | 0 | 0 |
| Comparative Example 1 | NaNi_{0.2}Fe_{0.26}Mn_{0.4}Mg_{0.1}O₂ | Ni²⁺ and Mg²⁺ | / | 1442 | 1 | 0.4 | 0.26 | 0.34 | 0 | 1 | 0.000 | 0 | 0 |
| Comparative Example 2 | NaNi_{0.24}Fe_{0.24}Mn_{0.42}Cu_{0.1}O₂ | Ni²⁺ and Cu²⁺ | / | 1442 | 1 | 0.42 | 0.24 | 0.34 | 0 | 1 | 0.000 | 0 | 0 |
| Comparative Example 3 | NaNi_{0.33}Fe_{0.33}Mn_{0.33}B_{0.01}O₂ | Ni²⁺ | B³⁺ | 1401 | 1 | 0.33 | 0.33 | 0.33 | 0.01 | 1 | 0.010 | 0 | 0 |
| Comparative Example 4 | NaNi_{0.25}Fe_{0.2}Mn_{0.45}Mg_{0.1}O₂ | Ni²⁺ and Mg²⁺ | / | 1577 | 1 | 0.45 | 0.2 | 0.35 | 0 | 1 | 0.000 | 0 | 0 |

The phase, the space group, the interlayer spacing of the positive electrode active materials, and the initial coulombic efficiency and cycling performance of the resulting button cells in Examples 1 to 20 and Comparative Examples 1 to 4 were characterized, with the results shown in Table 3.

### Test methods:

### (1) Test for phase, interlayer spacing d₀₀₃ of 003 crystal plane, and space group of positive electrode active material:

In a dry room or glove box, a sample to be tested was finely ground in an agate mortar and passed through a 350-mesh sieve, an appropriate amount of the sieved sample was taken and placed in the center of the groove of a sample holder, ensuring the loose sample powder was slightly higher than the plane of the sample holder; the surface of the sample was lightly pressed with a glass slide to level surface of the sample flush with the plane of a frame, and excess powder was scraped off. After sample preparation, testing was performed using a Brucker D8A_A25 X-ray powder diffractometer from Brucker AXS GmbH, with CuK_{α} radiation as a source, a wavelength of λ = 1.5406 Å, a 20 scanning angle range of 5° to 60°, and a scanning rate of 4°/min. After testing, through the angle corresponding to the 003 crystal plane, the interlayer spacing d₀₀₃ of the 003 crystal plane was obtained based on the Bragg equation 2d•sinθ = λ and each unit cell of the 003 crystal plane including three transition metal layers. The space group of the sample was confirmed by comparing the XRD diffraction peaks of the sample with standard cards in XRD analysis software, and a characteristic peak in an XRD pattern within the range of 40.5° to 42.5° indicated that the positive electrode active material was in the O3 phase.

### (2) First-cycle coulombic efficiency test of button cell

At 25°C, a button cell was charged at a constant current density of 10 mA/g to 4.3 V to obtain the charge specific capacity C₀ of the button cell, then discharged at a constant current density of 10 mA/g to 1.5 V to obtain the discharge specific capacity C₁ of the button cell. The first-cycle coulombic efficiency of the battery = C₁/C₀ × 100%.

### (3) Cycling performance testing

At 25°C, the button cell was charged at a constant current density of 10 mA/g to 4.2 V, then discharged at a constant current density of 10 mA/g to 1.5 V to obtain the discharge specific capacity C₂ of the button cell, followed by 50 cycles of constant current charge-discharge at 10 mA/g, and the discharge specific capacity C₃ of the 50th cycle was taken. The capacity retention rate after 50 cycles = C₂/C₃ × 100%.

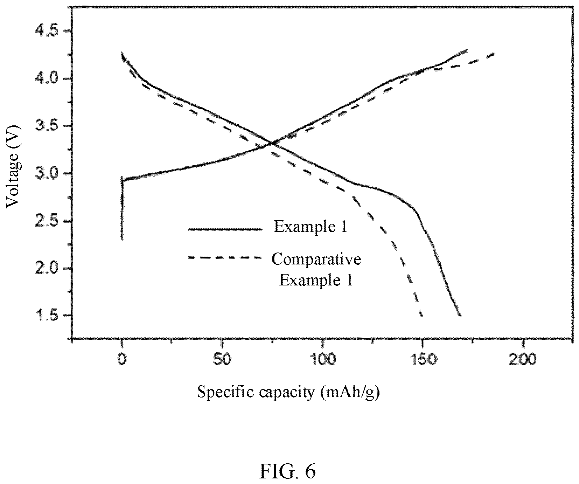

FIG. 6 is a comparison diagram of the charge-discharge curves of the button cells prepared in Example 1 and Comparative Example 1 at 10 mA/g for the first cycle. It can be seen from the figure that the first-cycle coulombic efficiency of the button cell in Example 1 is 98%, while the first-cycle coulombic efficiency of the button cell in Comparative Example 1 is 81%, indicating that the first-cycle coulombic efficiency of the button cell in Example 1 is obviously higher than that in Comparative Example 1.

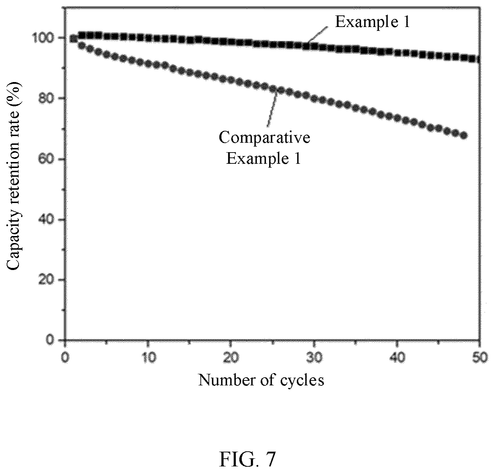

FIG. 7 is a comparison diagram of the capacity retention rates of the button cells prepared in Example 1 and Comparative Example 1. It can be seen from the figure that the capacity retention rate of the battery in Example 1 after 50 cycles is significantly better than the capacity retention rate in Comparative Example 1.

**Table 3**

| Number | Interlayer spacing d₀₀₃ (nm) | Space group | Phase | First-cycle coulombic efficiency | Capacity retention rate after 50 cycles |
|---|---|---|---|---|---|
| Example 1 | 0.532 | R3̅*m* | O3 | 98% | 88% |
| Example 2 | 0.533 | R3̅*m* | O3 | 100% | 91% |
| Example 3 | 0.532 | R3̅*m* | O3 | 100% | 82% |
| Example 4 | 0.534 | R3̅*m* | O3 | 100% | 85% |
| Example 5 | 0.534 | R3̅*m* | O3 | 99% | 87% |
| Example 6 | 0.533 | R3̅*m* | O3 | 98% | 85% |
| Example 7 | 0.535 | R3̅*m* | O3 | 99% | 85% |
| Example 8 | 0.535 | R3̅*m* | O3 | 99% | 87% |
| Example 9 | 0.534 | R3̅*m* | O3 | 98% | 83% |
| Example 10 | 0.535 | R3̅*m* | O3 | 99% | 89% |
| Example 11 | 0.535 | R3̅*m* | O3 | 97% | 81% |
| Example 12 | 0.535 | R3̅*m* | O3 | 98% | 90% |
| Example 13 | 0.534 | R3̅*m* | O3 | 95% | 86% |
| Example 14 | 0.535 | R3̅*m* | O3 | 99% | 89% |
| Example 15 | 0.534 | R3̅*m* | O3 | 97% | 81% |
| Example 16 | 0.533 | R3̅*m* | O3 | 98% | 86% |
| Example 17 | 0.533 | R3̅*m* | O3 | 99% | 93% |
| Example 18 | 0.535 | R3̅*m* | O3 | 97% | 81% |
| Example 19 | 0.535 | R3̅*m* | O3 | 98% | 81% |
| Example 20 | 0.536 | R3̅*m* | O3 | 99% | 81% |
| Comparative Example 1 | 0.533 | R3̅*m* | O3 | 81% | 71% |
| Comparative Example 2 | 0.534 | R3̅*m* | O3 | 87% | 74% |
| Comparative Example 3 | 0.535 | R3̅*m* | O3 | 91% | 63% |
| Comparative Example 4 | 0.535 | R3̅*m* | O3 | 79% | 73% |

Conclusion: From the data in Table 3, it can be seen that the first-cycle coulombic efficiency and the capacity retention rate after 50 cycles of the batteries in Examples 1 to 20 are significantly higher than those of the batteries in Comparative Examples 1 to 4. This indicates that the positive electrode active material of the present application including N ions with an ionic potential greater than or equal to 5 Å⁻¹ and the manganese ions, iron ions, M ions, and N ions satisfying ΣBᵢ × Iᵢ⁴ ≥ 1500 can improve the first-cycle coulombic efficiency and cycling performance of the battery.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A positive electrode active material, comprising:
NaₓMnₐFe_{b}M_{c}N_{d}O_{2+δ-e}Fₑ,
wherein 0.5 ≤ x ≤ 1.1, a ≥ 0, b ≥ 0, c ≥ 0, d > 0, a + b + c + d = 1, -0.1 ≤ δ ≤ 0.1, and e ≥ 0; M ions comprise at least one of Ni²⁺, Ni³⁺, Cu²⁺, Cu⁺, Zn²⁺, Mg²⁺, Y³⁺, La³⁺, In³⁺, Sb³⁺, Li⁺, Sn²⁺, and Ag⁺; ΣBᵢ × I₁⁴ ≥ 1500 Å⁻⁴, wherein Bᵢ is a molar fraction of cations, Iᵢ is an ionic potential of the cations, in unit of Å⁻¹, and the cations comprise manganese ions, iron ions, M ions, and N ions; and the ionic potential of the N ions is greater than or equal to 5 Å⁻¹.

2. The positive electrode active material according to claim 1, wherein 1500 Å⁻⁴ ≤ ΣBᵢ × Iᵢ⁴ ≤ 1900 Å⁻⁴.

3. The positive electrode active material according to claim 1 or 2, wherein the N ions comprise at least one of B³⁺, Ti⁴⁺, Al³⁺, Si⁴⁺, Sn⁴⁺, Sb⁵⁺, Zr⁴⁺, and Nb⁵⁺, optionally, the N ions comprise at least one of B³⁺, Ti⁴⁺, Zr⁴⁺, and Al³⁺.

4. The positive electrode active material according to any one of claims 1 to 3, wherein the M ions comprise at least one of Ni²⁺, Ni³⁺, Cu²⁺, Cu⁺, Zn²⁺, and Mg²⁺.

5. The positive electrode active material according to any one of claims 1 to 4, wherein the positive electrode active material satisfies one or more of the following conditions:
x satisfies 0.7 ≤ x ≤ 1, optionally 0.8 ≤ x ≤ 1;
a satisfies 0.3 ≤ a ≤ 0.7, optionally 0.35 ≤ a ≤ 0.55;
b satisfies 0.1 ≤ b ≤ 0.4, optionally 0.2 ≤ b ≤ 0.3;
c satisfies 0.2 ≤ c ≤ 0.5, optionally 0.3 ≤ c ≤ 0.4;
d satisfies 0.005 ≤ d ≤ 0.1, optionally 0.01 ≤ d ≤ 0.05;
δ satisfies -0.05 ≤ δ ≤ 0.05, optionally -0.02 ≤ δ ≤ 0.02; and
e satisfies 0 ≤ e ≤ 0.01, optionally 0.001 ≤ e ≤ 0.005.

6. The positive electrode active material according to any one of claims 1 to 5, wherein 0.005 ≤ d/(a + b + c) ≤ 0.1, optionally 0.01 ≤ d/(a + b + c) ≤ 0.05.

7. The positive electrode active material according to any one of claims 1 to 6, wherein a phase of the positive electrode active material comprises an O3 phase, a space group comprises R3̅*m*, and an interlayer spacing ranges from 0.53 nm to 0.54 nm.

8. The positive electrode active material according to any one of claims 1 to 7, wherein the positive electrode active material satisfies one or more of the following conditions:
Dᵥ50 of the positive electrode active material ranges from 2 µm to 30 µm, optionally from 4 µm to 12 µm;
a specific surface area of the positive electrode active material ranges from 0.1 m²/g to 2 m²/g, optionally from 0.3 m²/g to 1 m²/g; and
a compacted density of the positive electrode active material under 300 MPa pressure ranges from 3 g/cm³ to 5 g/cm³, optionally from 3 g/cm³ to 4 g/cm³.

9. A method for preparing the positive electrode active material according to any one of claims 1 to 8, comprising:
mixing an Na source, an Fe source, an Mn source, an M source, and an N source to obtain a precursor; and
calcining the precursor to obtain the positive electrode active material.

10. A method for preparing the positive electrode active material according to any one of claims 1 to 8, comprising:
mixing an Fe source, an Mn source, an M source, and an N source with water to obtain a mixed solution;
reacting the mixed solution with a precipitant to obtain a precursor; and
mixing and calcining the precursor with an Na source to obtain the positive electrode active material.

11. A positive electrode plate, wherein the positive electrode plate comprises the positive electrode active material according to any one of claims 1 to 8 or a positive electrode active material prepared by the method according to claim 9 or 10.

12. A battery, wherein the battery comprises the positive electrode plate according to claim 11.

13. An electric device, comprising the battery according to claim 12.
